# EUROPEAN PATENT APPLICATION

(11) **EP 4 815 223 A1**
(43) Date of publication of application: **30.09.2026**
(21) Application number: 26167946.8
(22) Date of filing: 26.03.2026
(51) Int. Cl.: H02B 1/20, H01R 13/11, H01R 13/53, H01R 13/74, H02B 1/06, H02B 11/04, H02B 1/21, H02B 1/14

(54) **BUSBAR PROTECTIVE GRILLE, BUSBAR PROTECTIVE APPARATUS, AND ELECTRICAL CONTROL CABINET**

(30) Priority: 27.03.2025 CN 202520553543 U
(71) Applicant: SCHNEIDER ELECTRIC INDUSTRIES SAS, 92500 Rueil-Malmaison (FR)
(72) Inventor: ZHANG, Qinghong, Xi'an, Shaanxi, 710076 (CN); DING, Senmao, Xi'an, Shaanxi, 710076 (CN); YANG, Xiaotian, Xi'an, Shaanxi, 710076 (CN)
(74) Representative: Manitz Finsterwald Patent- und Rechtsanwaltspartnerschaft mbB

(57) **Abstract**

A busbar protective grille includes a main body portion and a pair of side protective portions. The main body portion includes a first opening and a second opening. The first opening and the second opening are disposed on opposite sides of the main body portion and communicate with the interior of the main body portion. The first opening and the second opening are adapted to allow the plug-in assembly to pass through the main body portion, so that the plug-in assembly is electrically connected to the busbar at the second opening. The pair of side protective portions are disposed in parallel on opposite sides of the second opening and are coupled to the main body portion. The pair of side protective portions extend in the direction away from the first opening to shield the portion of the plug-in assembly contacting the busbar.

## Description

### FIELD

Embodiments of the present disclosure generally relate to the field of electrical equipment, and in particular, to a busbar protective grille, a busbar protective apparatus, and an electrical control cabinet.

### BACKGROUND

Generally, a plurality of busbars are provided in an electrical control cabinet to supply power to various electrical devices therein. In order to prevent the busbars and their support structures from occupying excessive space in the electrical control cabinet, a distance between the busbars meets the minimum safe inter-phase distance requirement required under normal operating conditions. In some conventional electrical control cabinets, when the electrical device is connected to the busbars through dedicated plug-in assemblies, the plug-in assemblies are fixed on the busbars through clamps. In this way, the inter-phase distance between the busbars becomes the actual distance between two adjacent plug-in assemblies. Since the plug-in assemblies themselves have a certain size, the actual inter-phase distance between the busbars is less than a predetermined inter-phase distance, thereby increasing the risk of electrical accidents.

### SUMMARY

The purpose of embodiments of the present disclosure is to provide a busbar protective grille, a busbar protective apparatus, and an electrical control cabinet, to at least partially solve the above problems and other potential problems.

In a first aspect of the present disclosure, a busbar protective grille is provided. The busbar protective grille includes: a main body portion including a first opening and a second opening, the first opening and the second opening being disposed on opposite sides of the main body portion and communicating with an interior of the main body portion, where the first opening and the second opening are adapted to allow a plug-in assembly to pass through the main body portion, so that the plug-in assembly is electrically connected to a busbar at the second opening; and a pair of side protective portions disposed in parallel on opposite sides of the second opening and coupled to the main body portion, the pair of side protective portions extending in a direction away from the first opening to shield a portion of the plug-in assembly contacting the busbar.

In some embodiments, the busbar protective grille further includes: a partition portion disposed at least partially inside the main body portion and adapted to divide the interior of the main body portion into a plurality of layered regions for placing the plug-in assembly.

In some embodiments, a step is provided on a surface of the partition portion, so that a heat dissipation channel is formed between the plug-in assembly and the surface of the partition portion.

In some embodiments, the busbar protective grille further includes: a pair of elastic positioning portions disposed in parallel on opposite sides of the first opening and coupled to the main body portion, where the pair of elastic positioning portions are adapted to be engaged with a fixing device for the busbar protective grille.

In some embodiments, the busbar protective grille further includes: a single elastic positioning portion including a fixed end and a free end, the fixed end being coupled to the main body portion, the free end extending in a direction away from the second opening and including a first engaging groove disposed on a side away from the main body portion, the main body portion further including a second engaging groove disposed on a side away from the elastic positioning portion, and the first engaging groove and the second engaging groove being adapted to be engaged with a fixing device for the busbar protective grille.

In some embodiments, the elastic positioning portion further includes a first guiding inclined surface disposed on a side away from the main body portion to guide the first engaging groove into engagement with the fixing device.

In some embodiments, the main body portion further includes an error-proof positioning portion disposed in the second engaging groove, and the error-proof positioning portion is adapted to be engaged with an error-proof limiting portion on the fixing device.

In some embodiments, the elastic positioning portion further includes a protrusion disposed on the side of the free end away from the main body portion, and the protrusion includes a removal groove which is configured to be engaged with a removal tool to drive the free end to move.

In some embodiments, a limiting groove is provided at the first opening, and the limiting groove is adapted to be engaged with an outer side wall of the plug-in assembly.

In some embodiments, the busbar protective grille further includes: an accidental-contact protective portion coupled to the main body portion at the second opening and disposed corresponding to the busbar, where the accidental-contact protective portion is adapted to shield a side surface of the busbar facing towards the first opening, so as to prevent a user from contacting the busbar at the first opening.

In some embodiments, a side of the accidental-contact protective portion facing towards the first opening is provided with a second guiding inclined surface to guide the plug-in assembly to be connected to the busbar.

In some embodiments, the busbar protective grille further includes: at least two groups of ribs disposed in parallel on opposite sides of the main body portion and the pair of side protective portions, and coupled to the main body portion and the corresponding side protective portions.

In a second aspect of the present disclosure, a busbar protective apparatus is provided. The busbar protective apparatus includes: a first side support and a second side support disposed in parallel; a front side connecting member coupled to the first side support and the second side support; and a plurality of busbar protective grilles according to the first aspect of the present disclosure, coupled to the front side connecting member.

In some embodiments, the front side connecting member is provided with a plurality of through holes, and a plurality of busbar protective grilles respectively disposed corresponding to the plurality of through holes.

In some embodiments, the plurality of through holes are located at different heights.

In some embodiments, a pair of notches are provided at an edge of the front side connecting member corresponding to each through hole, and a pair of elastic positioning portions of the busbar protective grille are respectively inserted into the pair of notches.

In a third aspect of the present disclosure, an electrical control cabinet is provided. The electrical control cabinet includes: a cabinet body; a plurality of busbars disposed in the cabinet body; and the busbar protective apparatus according to the second aspect of the present disclosure, mounted in the cabinet body, and the plurality of busbar protective grilles respectively abut against the plurality of busbars.

In embodiments of the present disclosure, the busbar protective grille includes the main body portion and the pair of side protective portions. The main body portion includes the first opening and the second opening. The first opening and the second opening are disposed on opposite sides of the main body portion and communicate with the interior of the main body portion. The first opening and the second opening are adapted to allow the plug-in assembly to pass through the main body portion, so that the plug-in assembly is electrically connected to the busbar at the second opening. The pair of side protective portions are disposed in parallel on opposite sides of the second opening and are coupled to the main body portion. The pair of side protective portions extend in the direction away from the first opening to shield the portion of the plug-in assembly contacting the busbar. With this arrangement, when the plug-in assembly passes through the main body portion and contacts the busbar, the pair of side protective portions extend to two sides of the busbar, so that the portion of the plug-in assembly contacting the busbar can be shielded. The pair of side protective portions improves the insulation performance between two adjacent plug-in assemblies, eliminates the influence of the plug-in assemblies on the inter-phase distance between the busbars, and helps to improve the electrical safety between the busbars.

It should be understood that the content described in this content section is not intended to limit the key features or important features of embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, where:
FIG. 1 illustrates a perspective view of a busbar protective grille according to some embodiments of the present disclosure, in which a second opening and a step on an upper surface of the partition portion are shown;
FIG. 2 illustrates a perspective view of a busbar protective grille according to some embodiments of the present disclosure, in which a second opening and a step on a lower surface of the partition portion are shown;
FIG. 3 illustrates a perspective view of a busbar protective grille according to some embodiments of the present disclosure, in which a first opening is shown;
FIG. 4 illustrates a perspective view of a busbar protective grille according to some embodiments of the present disclosure, in which a second guiding inclined surface disposed on the accidental-contact protective portion is shown;
FIG. 5 illustrates a schematic diagram of a busbar protective grille connected to a busbar clamp according to some embodiments of the present disclosure;
FIG. 6 illustrates a perspective view of a busbar protective grille according to further embodiments of the present disclosure, in which a single elastic positioning portion is shown;
FIG. 7 illustrates a perspective view of a busbar protective grille according to further embodiments of the present disclosure, in which a second engaging groove is shown;
FIG. 8 illustrates a perspective view of a busbar protective grille and a front side connecting member according to further embodiments of the present disclosure;
FIG. 9 illustrates a schematic diagram of a busbar protective apparatus according to embodiments of the present disclosure;
FIG. 10 illustrates a schematic diagram of a busbar protective grille and a front side connecting member according to embodiments of the present disclosure, in which a first opening is shown;
FIG. 11 illustrates a perspective view of a busbar protective grille and a front side connecting member according to embodiments of the present disclosure, in which a second opening and a pair of side protective portions are shown; and
FIG. 12 illustrates a schematic diagram of an electrical control cabinet according to embodiments of the present disclosure.

### Description of reference numerals:

10 busbar protective grille;
11 main body portion; 111 first opening; 1110 limiting groove; 112 second opening; 113 second engaging groove; 114 error-proof positioning portion;
12 side protective portion;
13 partition portion; 131 step;
14 elastic positioning portion; 141 fixed end; 142 free end; 143 first engaging groove; 144 first guiding inclined surface; 145, protrusion; 146, removal groove;
15 accidental-contact protective portion; 151 second guiding inclined surface;
16 rib;
20 busbar protective apparatus;
21 first side support; 22 second side support; 23 front side connecting member; 230 through hole; 231 notch; 232 error-proof limiting portion;
30 cabinet
40 busbar;
50 busbar clamp.

### DETAILED DESCRIPTION

Embodiments of the present disclosure will be described in more detail below with reference to the accompanying drawings. While embodiments of the present disclosure are shown in the drawings, it should be understood that the present disclosure may be implemented in various forms and should not be limited by embodiments set forth herein. Rather, these embodiments are provided to make this disclosure more thorough and complete, and to fully convey the scope of the present disclosure to those skilled in the art.

As used herein, the term "including" and variations thereof represent openness, i.e., "including but not limited to". Unless specifically stated, the term "or" means "and/or". The term "based on" means "based at least in part on". The terms "an example embodiment" and "an embodiment" mean "at least one example embodiment". The term "another embodiment" means "at least one further embodiment". The terms "first", "second", and the like may refer to different or identical objects.

As described above, in some conventional electrical control cabinets, when an electrical device is connected to busbars through dedicated plug-in assemblies, the plug-in assemblies are fixed on the busbars through clamps. In this way, the inter-phase distance between the busbars becomes the actual distance between two adjacent plug-in assemblies. Since the plug-in assemblies themselves have a certain size, the actual inter-phase distance between the busbars is less than a predetermined inter-phase distance, thereby increasing the risk of electrical accidents.

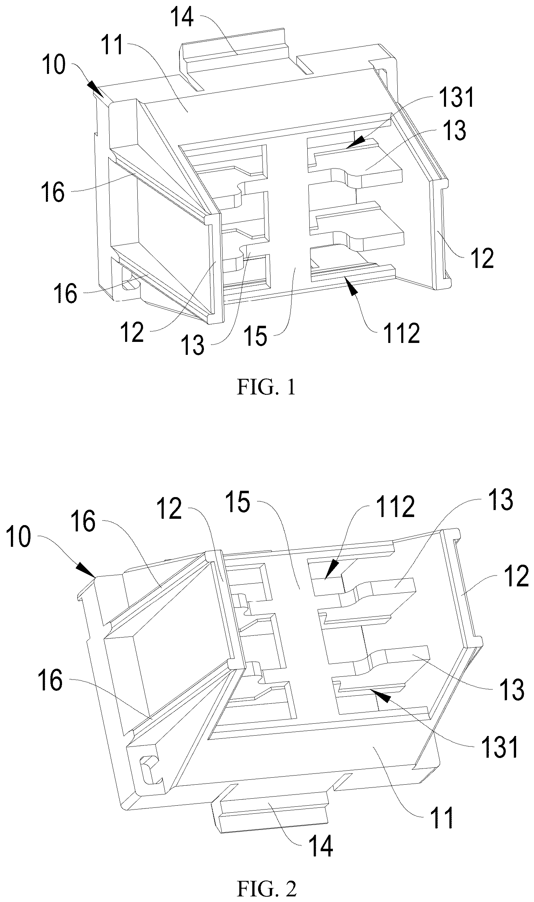

In embodiments of the present disclosure, a busbar protective grille, a busbar protective apparatus, and an electrical control cabinet are provided. In the busbar protective grille, a main body portion includes a first opening and a second opening. The first opening and the second opening are disposed on opposite sides of the main body portion and communicate with an interior of the main body portion. The first opening and the second opening are adapted to allow a plug-in assembly to pass through the main body portion, so that the plug-in assembly is electrically connected to a busbar at the second opening. A pair of side protective portions are disposed in parallel on opposite sides of the second opening and are coupled to the main body portion. The pair of side protective portions extend in a direction away from the first opening to shield a portion of the plug-in assembly contacting the busbar. With this arrangement, when the plug-in assembly passes through the main body portion and contacts the busbar, the pair of side protective portions extend to two sides of the busbar, so that the portion of the plug-in assembly contacting the busbar can be shielded. The pair of side protective portions improves the insulation performance between two adjacent plug-in assemblies, eliminates the influence of the plug-in assemblies on the inter-phase distance between the busbars, and helps to improve the electrical safety between the busbars. The principles of the present disclosure will be described in detail below with reference to FIGS. 1 to 12.

As shown in FIGS. 1 to 3, a busbar protective grille 10 is an insulating member providing a protection function in an electrical control cabinet, and is made of an insulating material such as glass fiber reinforced plastic, engineering plastic, epoxy resin, or composite materials. Compared with an insulating structure integrally arranged in the cabinet, the busbar protective grille 10 has a smaller volume and a lower cost. The busbar protective grille 10 may support a plug-in assembly electrically connected to a busbar 40, and may insulate the plug-in assembly from other structures of the electrical control cabinet. Here, the plug-in assembly may be, for example, a busbar clamp 50. The plug-in assembly may be fixed on the busbar protective grille 10, or may be detachably mounted on the busbar protective grille 10, thereby achieving stable contact between the plug-in assembly and the busbar 40.

As shown in FIGS. 1 to 3, the busbar protective grille 10 includes a main body portion 11 and a pair of side protective portions 12. The main body portion 11 includes a first opening 111 and a second opening 112. The first opening 111 and the second opening 112 are respectively located on opposite sides of the main body portion 11 and communicate with an interior of the main body portion 11. In this way, the plug-in assembly may be inserted from the first opening 111, pass through the interior of the main body portion 11, and finally be electrically connected to the busbar 40 at the second opening 112.

In some embodiments, a guiding structure may be disposed inside the main body portion 11. The guiding structure can not only facilitate the insertion of the plug-in assembly into the main body portion 11, but also prevent the plug-in assembly from loosening in the main body portion 11, thereby ensuring stable contact between the plug-in assembly and the busbar 40.

As shown in FIGS. 1 and 2, the pair of side protective portions 12 are respectively disposed on opposite sides of the second opening 112 and extend in a direction away from the first opening 111, so as to shield a portion of the plug-in assembly contacting the busbar 40.

In this way, when the plug-in assembly passes through the main body portion 11 and contacts the busbar 40, the pair of side protective portions 12 extend to two sides of the busbar 40, so that the portion of the plug-in assembly contacting the busbar 40 can be shielded. The pair of side protective portions 12 improves the insulation performance between two adjacent plug-in assemblies, eliminates the influence of the plug-in assemblies on the inter-phase distance between the busbars 40, and helps to improve the electrical safety between the busbars 40.

In some embodiments, as shown in FIGS. 1 to 3, the busbar protective grille 10 further includes a partition portion 13. The partition portion 13 is disposed at least partially inside the main body portion 11, and can divide the interior of the main body portion 11 into a plurality of layered regions for placing the plug-in assembly.

In some embodiments, as shown in FIGS. 1 to 3, two partition portions 13 are disposed inside the main body portion 11. The interior of the main body portion 11 is divided into three layers by two partition portions 13, and each layer can be used for placing a plug-in assembly. With this arrangement, up to three plug-in assemblies can be placed in the main body portion 11 of the busbar protective grille 10. During use, if the working current is relatively large, the number of plug-in assemblies to be placed can be increased. If the working current is relatively small, the number of plug-in assemblies to be placed can be decreased.

In other embodiments, four partition portions 13 may be provided inside the main body portion 11. The interior of the main body portion 11 is divided into five layers by four partition portions 13, and each layer can be used for placing the plug-in assembly. It should be understood that the number of the partition portions 13 may be set according to actual use requirements, and the present disclosure is not intended to limit the specific number.

In some embodiments, a plurality of plug-in assemblies disposed in the main body portion 11 may be disposed at intervals in a plurality of partition layers. For example, when two plug-in assemblies are placed in the main body portion 11, the two plug-in assemblies may be respectively disposed in the first layer and the third layer, and the idle second layer is configured to dissipate heat.

In some embodiments, as shown in FIGS. 1 and 2, a step 131 is provided on a surface of the partition portion 13. In this way, the step 131 may allow a certain air gap between the plug-in assembly and the surface of the partition portion 13, and the air gap may serve as a heat dissipation channel. When the plug-in assembly generates heat in the working process, the heat can be dissipated through the heat dissipation channel, so that the heat dissipation efficiency of the plug-in assembly can be improved, and the overheating risk of the system can be reduced.

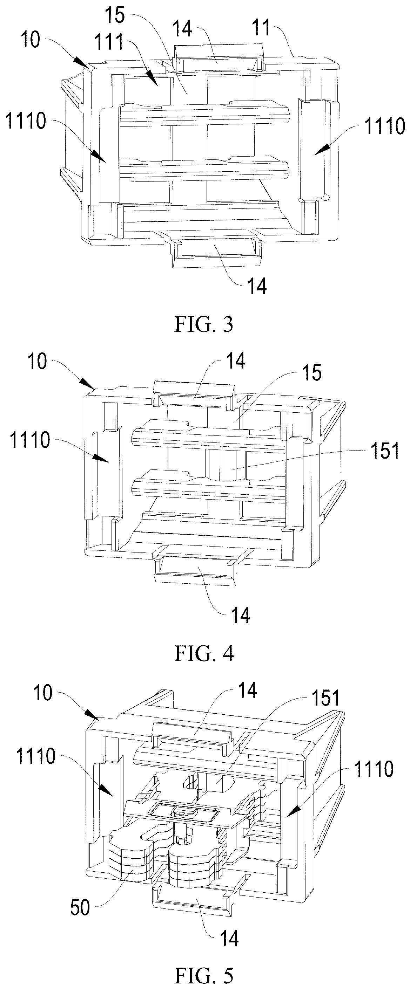

In some embodiments, as shown in FIGS. 3 to 5, the busbar protective grille 10 further includes a pair of elastic positioning portions 14. The pair of elastic positioning portions 14 are disposed in parallel on opposite sides of the first opening 111 of the main body portion 11, and are tightly coupled to the main body portion 11 in a coupling manner.

In this way, during the mounting process of the busbar protective grille 10, a user only needs to press the pair of elastic positioning portions 14 to contract them inward, so that the busbar protective grille 10 can be mounted to the fixing device, thereby saving mounting time and labor costs. Furthermore, after mounting, the pair of elastic positioning portions 14 can form a tight connection with the fixing device by virtue of their own elastic restoring force, so as to prevent loosening or detachment caused by vibration or other external forces. A favorable connection state can be kept between the pair of elastic positioning portions 14 and the fixing device, and it is ensured that the busbar protective grille 10 works normally. In addition, when the busbar protective grille 10 needs to be maintained or replaced, the user only needs to press the pair of elastic positioning portions 14 again to remove the elastic positioning portions 14 from the fixing device.

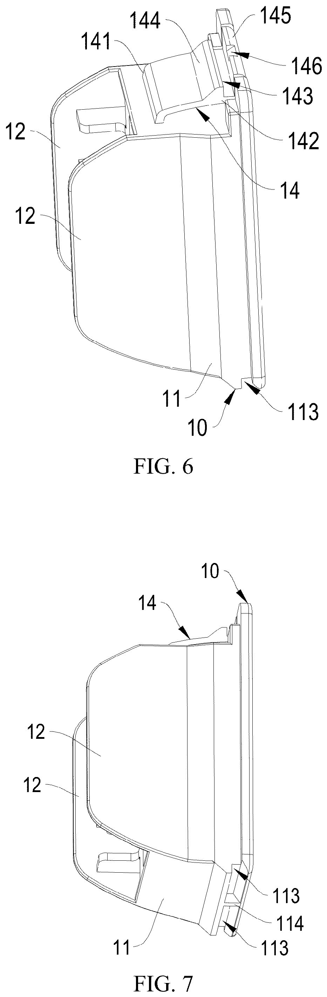

In some embodiments, as shown in FIGS. 6 to 8, the busbar protective grille 10 may include a single elastic positioning portion 14, and the single elastic positioning portion 14 is disposed on a side of the main body portion 11. With this arrangement, the busbar protective grille 10 can be mounted to the fixing device by the elastic action of the single elastic positioning portion 14.

As an example, the single elastic positioning portion 14 includes a fixed end 141 and a free end 142. The fixed end 141 is coupled to the main body portion 11, and the free end 142 extends in a direction away from the second opening 112. In this manner, the single elastic positioning portion 14 may form a cantilever structure. The free end 142 includes a first engaging groove 143 disposed on a side away from the main body portion 11. The main body portion 11 further includes a second engaging groove 113 disposed on a side away from the elastic positioning portion 14. The first engaging groove 143 and the second engaging groove 113 are adapted to be engaged with the fixing device for the busbar protective grille 10.

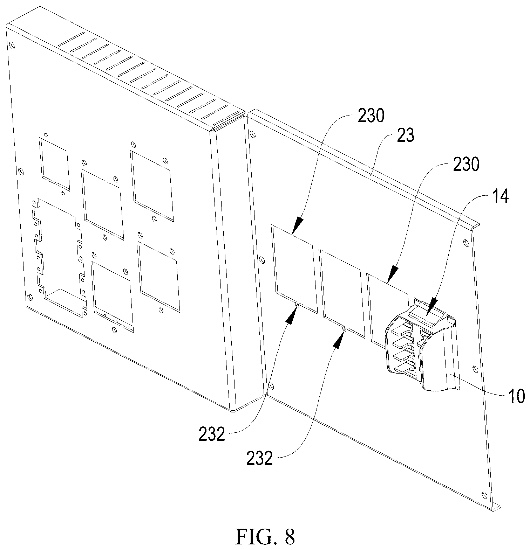

In some embodiments, as shown in FIG. 8, the fixing device for the busbar protective grille 10 may include a plurality of through holes 230. During the mounting process of the busbar protective grille 10, the user may first align the second engaging groove 113 on the main body portion 11 with an edge of the through hole 230, so that the edge of the through hole 230 is inserted into the second engaging groove 113. Then, the main body portion 11 is pushed to rotate, so that an edge of the other side of the through hole 230 is inserted into the first engaging groove 143, thereby fixing the busbar protective grille 10 in the through hole 230. Under the elastic action of the elastic positioning portion 14, the busbar protective grille 10 will not be separated from the fixing device.

In some embodiments, as shown in FIG. 6, the elastic positioning portion 14 further includes a first guiding inclined surface 144. The first guiding inclined surface 144 is disposed on a side of the elastic positioning portion 14 away from the main body portion 11. With this arrangement, the first guiding inclined surface 144 may abut against the edge of the through hole 230 during the mounting process of the busbar protective grille 10. When the user pushes the main body portion 11 to rotate, the first guiding inclined surface 144 can guide the first engaging groove 143 into engagement with the fixing device, thereby fixing the busbar protective grille 10 in the through hole 230.

In some embodiments, as shown in FIG. 7, the main body portion 11 further includes an error-proof positioning portion 114. The error-proof positioning portion 114 may be engaged with an error-proof limiting portion 232 on the fixing device, thereby avoiding an orientation error during the mounting process of the busbar protective grille 10.

In some embodiments, as shown in FIG. 7, the error-proof positioning portion 114 is disposed in the second engaging groove 113. The error-proof limiting portion 232 is provided at the edge of the fixing device corresponding to the through hole 230. With this arrangement, when the edge of the through hole 230 is inserted into the second engaging groove 113, the error-proof positioning portion 114 is engaged with the error-proof limiting portion 232. If the mounting orientation of the busbar protective grille 10 is adjusted, the error-proof positioning portion 114 and the error-proof limiting portion 232 are separated from each other, and the busbar protective grille 10 cannot be mounted in the through hole 230. As an example, the error-proof positioning portion 114 may be a protrusion, the error-proof limiting portion 232 may be a notch, and the protrusion may be inserted into the notch, thereby avoiding an error in the mounting orientation.

In some embodiments, as shown in FIG. 6, the elastic positioning portion 14 further includes a protrusion 145 disposed on the side of the free end 142 away from the main body portion 11. The protrusion 145 includes a removal groove 146 which is configured to be engaged with a removal tool to drive the free end 142 to move. With this arrangement, when the main body portion 11 is inserted into the through hole 230 of the fixing device, the protrusion 145 can prevent the entire main body portion 11 and the elastic positioning portion 14 from passing through the through hole 230, so as to limit the busbar protective grille 10. In addition, when the busbar protective grille 10 needs to be removed from the through hole 230 of the fixing device, the user can insert the removal tool into the removal groove 146 on the protrusion 145. By applying pressure to the protrusion 145 by the removal tool, the free end 142 can be moved towards the main body portion 11, so that the edge of the through hole 230 is disengaged from the first engaging groove 143.

In some embodiments, as shown in FIG. 3, a limiting groove 1110 is provided at the first opening 111, and the limiting groove 1110 can be engaged with an outer side wall of the plug-in assembly. The limiting groove 1110 is disposed at an edge of the first opening 111, and a shape and a size of the limiting groove 1110 mate with those of the outer side wall of the plug-in assembly. When the plug-in assembly is inserted into the first opening 111, the limiting groove 1110 can be tightly attached to the outer side wall of the plug-in assembly to form a mechanical locking effect. In this way, the plug-in assembly can be accurately positioned during insertion into the main body portion 11, which can prevent the plug-in assembly from loosening or displacement during use, thereby improving the stability and reliability of the electrical connection.

In some embodiments, as shown in FIGS. 1 to 3, the busbar protective grille 10 further includes an accidental-contact protective portion 15. The accidental-contact protective portion 15 is disposed at the second opening 112 and is coupled to the main body portion 11, and a position thereof corresponds to a mounting position of the busbar 40. During use, the accidental-contact protective portion 15 can shield a side surface of the busbar 40 facing towards the first opening 111. Even if the user operates at the first opening 111, the user cannot directly contact the busbar 40. In this way, when the operator frequently performs operations such plugging, unplugging, or inspection, the shielding function of the accidental-contact protective portion 15 can significantly reduce the risk of accidental electric shock and protect the personal safety of the operator.

In some embodiments, as shown in FIGS. 4 and 5, a second guiding inclined surface 151 is disposed on a side of the accidental-contact protective portion 15 facing towards the first opening 111. In this way, when the busbar clamp 50 moves inward along the second guiding inclined surface 151, the second guiding inclined surface 151 can urge a clamping head portion of the busbar clamp 50 to pre-open at a certain angle, thereby reducing the resistance during direct insertion, making the whole mounting process more smooth, and avoiding damage to the busbar 40 caused by excessive force.

It should be understood that the second guiding inclined surface 151 may be in the shape of a cone, an arc, a semicircular, or the like. Regardless of the shape adopted, the plug-in assembly may be guided from the exterior into the internal space and finally into contact with the busbar 40 through a gradually varying profile. In other embodiments, the second guiding inclined surface 151 may be of other shapes, which is not intended to be limited in the present disclosure.

In some embodiments, as shown in FIGS. 1 and 2, the busbar protective grille 10 further includes at least two groups of ribs 16. The at least two groups of ribs 16 are disposed in parallel on opposite sides of the main body portion 11 and the pair of side protective portions 12, and are tightly connected to the main body portion 11 and the corresponding side protective portion 12 in a coupling manner. In this way, the ribs 16 may support the pair of side protective portions 12 on two sides, enhancing the rigidity and strength of the side protective portions 12 by providing additional structural support. During mounting and removal, the side protective portions 12 are often subjected to external forces, and in particular, the cantilevered portions of the side protective portions 12 are prone to fracture. The ribs 16 may relieve the local stress on the side protective portions 12, thereby avoiding the risk of fracture of the cantilevered portions.

It should be understood that each group of ribs 16 may include one or more ribs 16, and the number of the ribs 16 may be determined according to the material properties and the size of the busbar protective grille 10, and the present disclosure is not intended to be limited thereto.

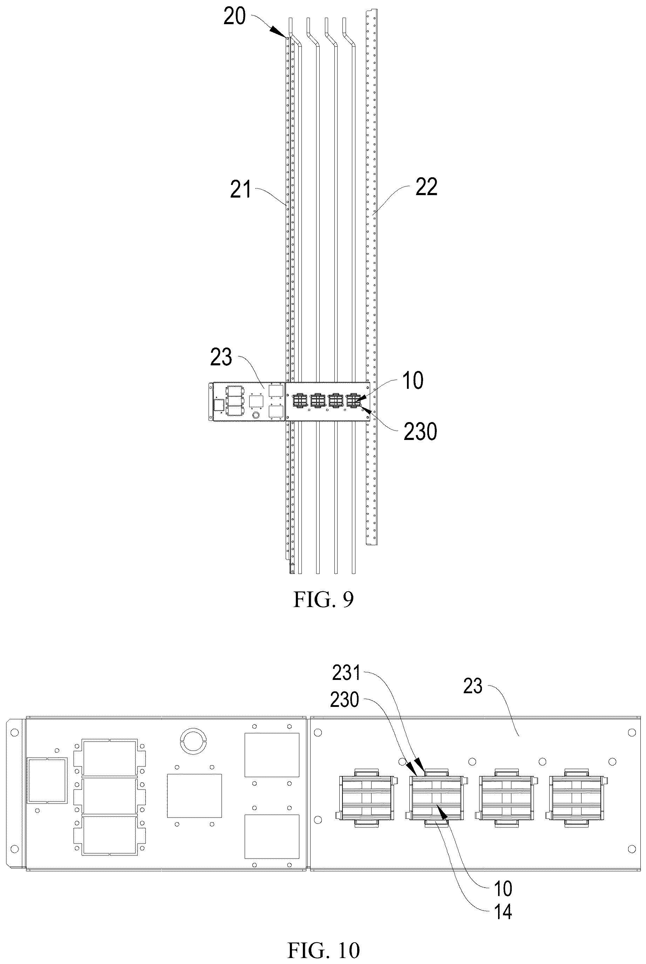

In a second aspect of the present disclosure, a busbar protective apparatus 20 is provided. As shown in FIGS. 9 to 11, the busbar protective apparatus 20 includes a first side support 21, a second side support 22, a front side connecting member 23, and a plurality of any of the aforementioned busbar protective grilles 10. The first side support 21 and the second side support 22 are disposed in parallel to form a basic frame. The front side connecting member 23 is coupled to the first side support 21 and the second side support 22.

As shown in FIGS. 9 to 11, the plurality of busbar protective grilles 10 are coupled to the front side connecting members 23. The front side connecting member 23 may support the plurality of busbar protective grilles 10, enabling them to contact the plurality of busbars 40 respectively. In this way, each busbar protective grille 10 can be positioned at a predetermined position, so as to be in stable contact with the corresponding busbar 40. In addition, the user may increase or decrease the number of the busbar protective grilles 10 according to actual needs, so as to accommodate different numbers and types of busbars 40.

In some embodiments, as shown in FIGS. 9 to 11, the front side connecting member 23 is provided with a plurality of through holes 230, and the plurality of through holes 230 correspond one-to-one to the plurality of busbar protective grilles 10. The first opening 111 of the busbar protective grille 10 is away from the busbar 40, and an end of the plug-in assembly away from the busbar 40 may be electrically connected to an electrical component in the electrical control cabinet.

In some embodiments, the plurality of through holes 230 on the front side connecting members 23 may be located at different heights. In this way, two adjacent plug-in assemblies are located at different heights, thereby avoiding an excessively small distance between the plug-in assemblies.

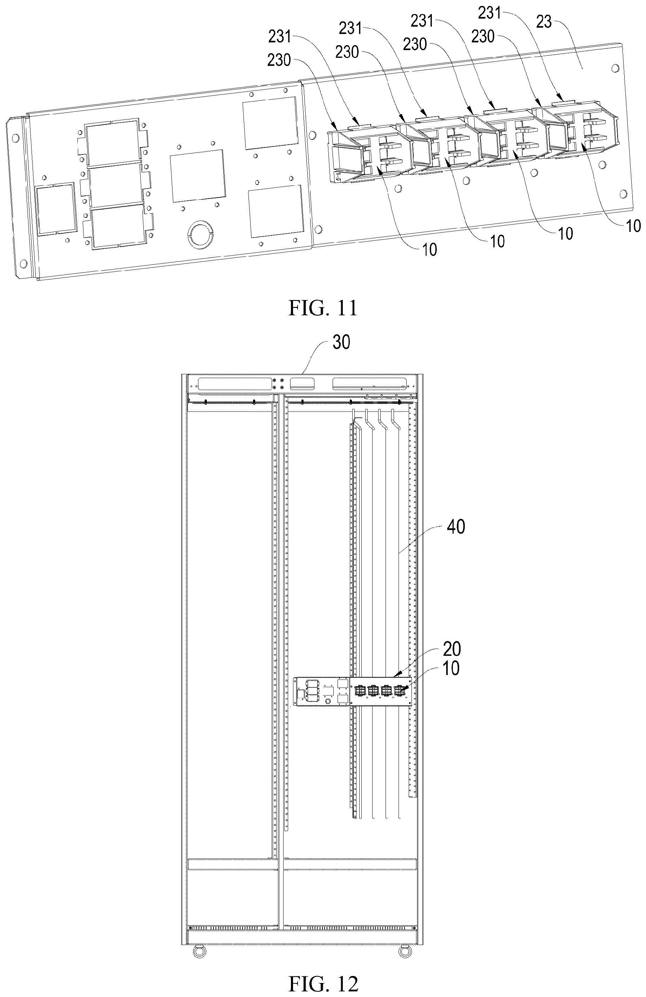

In some embodiments, as shown in FIGS. 10 and 11, a pair of notches 231 are provided at an edge of the front side connecting member 23 corresponding to each through hole 230, and the pair of elastic positioning portions 14 of the busbar protective grille 10 may be respectively inserted into the pair of notches 231. In this way, when the busbar protective grille 10 is mounted in the through hole 230 of the front side connecting member 23, the pair of elastic positioning portions 14 will be inserted into the corresponding notches 231 respectively. The pair of elastic positioning portions 14 will contract inwardly under compression, and once fully inserted into place, the elastic positioning portions 14 will be tightly attached to an inner wall of the front side connecting member 23 under the action of the elastic restoring force, to form a stable connection.

In a third aspect of the present disclosure, an electrical control cabinet is provided. As shown in FIG. 12, the electrical control cabinet includes a cabinet body 30, a plurality of busbars 40, and any of the aforementioned busbar protective apparatus 20. The cabinet body 30 is a main body structure of the electrical control cabinet, providing a space for mounting and accommodating various electrical components. The plurality of busbars 40 are disposed in the cabinet body 30 for transmitting high current. The busbar protective apparatus 20 is mounted in the cabinet body 30, and may support and fix the plug-in assembly electrically connected to the busbar 40. The busbar protective apparatus 20 includes a first side support 21, a second side support 22, a front side connecting member 23, and a plurality of busbar protective grilles 10. The plurality of busbar protective grilles 10 respectively abut against the plurality of busbars 40, so that each busbar 40 can be stably mounted at a predetermined position.

In the busbar protective grille 10, the main body portion 11 includes a first opening 111 and a second opening 112. The first opening 111 and the second opening 112 are disposed on opposite sides of the main body portion 11 and communicate with the interior of the main body portion 11. The first opening 111 and the second opening 112 are adapted to allow the plug-in assembly to pass through the main body portion 11, so that the plug-in assembly is electrically connected to the busbar 40 at the second opening 112. The pair of side protective portions 12 are disposed in parallel on opposite sides of the second opening 112 and are coupled to the main body portion 11. The pair of side protective portions 12 extend in a direction away from the first opening 111 to shield a portion of the plug-in assembly contacting the busbar 40. With this arrangement, when the plug-in assembly passes through the main body portion 11 and contacts the busbar 40, the pair of side protective portions 12 extend to two sides of the busbar 40, so that the portion of the plug-in assembly contacting the busbar 40 can be shielded. The pair of side protective portions 12 improves the insulation performance between two adjacent plug-in assemblies, eliminates the influence of the plug-in assemblies on the inter-phase distance between the busbars 40, and helps to improve the electrical safety between the busbars 40.

Various embodiments of the present disclosure have been described above, which are illustrative, not exhaustive, and are not limited to the embodiments disclosed. Many modifications and variations will be apparent to those of ordinary skill in the art without departing from the scope of the illustrated embodiments. The selection of the terms used herein is intended to explain the principles of the embodiments, practical applications, or technical improvements in the marketplace, or to enable others of ordinary skill in the art to understand the embodiments disclosed herein.

## Claims

1. A busbar protective grille (10), **characterized by** comprising:
a main body portion (11) comprising a first opening (111) and a second opening (112), the first opening (111) and the second opening (112) being disposed on opposite sides of the main body portion (11) and communicating with an interior of the main body portion (11), wherein the first opening (111) and the second opening (112) are adapted to allow a plug-in assembly to pass through the main body portion (11), so that the plug-in assembly is electrically connected to a busbar (40) at the second opening (112); and
a pair of side protective portions (12) disposed in parallel on opposite sides of the second opening (112) and coupled to the main body portion (11), the pair of side protective portions (12) extending in a direction away from the first opening (111) to shield a portion of the plug-in assembly contacting the busbar (40).

2. The busbar protective grille (10) of claim 1, **characterized by** further comprising:
a partition portion (13) disposed at least partially inside the main body portion (11) and adapted to divide the interior of the main body portion (11) into a plurality of layered regions for placing the plug-in assembly.

3. The busbar protective grille (10) of claim 2, **characterized in that** a step (131) is provided on a surface of the partition portion (13), so that a heat dissipation channel is formed between the plug-in assembly and the surface of the partition portion (13).

4. The busbar protective grille (10) of any of claims 1 to 3, **characterized by** further comprising:
a pair of elastic positioning portions (14) disposed in parallel on opposite sides of the first opening (111) and coupled to the main body portion (11), wherein the pair of elastic positioning portions (14) are adapted to be engaged with a fixing device for the busbar protective grille (10).

5. The busbar protective grille (10) of any of claims 1 to 3, **characterized by** further comprising:
a single elastic positioning portion (14) comprising a fixed end (141) and a free end (142), the fixed end (141) being coupled to the main body portion (11), the free end (142) extending in a direction away from the second opening (112) and comprising a first engaging groove (143) disposed on a side away from the main body portion (11), the main body portion (11) further comprising a second engaging groove (113) disposed on a side away from the elastic positioning portion (14), and the first engaging groove (143) and the second engaging groove (113) being adapted to be engaged with a fixing device for the busbar protective grille (10).

6. The busbar protective grille (10) of claim 5, **characterized in that** at least one of the following is satisfied:
the elastic positioning portion (14) further comprises a first guiding inclined surface (144) disposed on a side away from the main body portion (11) to guide the first engaging groove (143) into engagement with the fixing device;
the main body portion (11) further comprises an error-proof positioning portion (114) disposed in the second engaging groove (113), and the error-proof positioning portion (114) is adapted to be engaged with an error-proof limiting portion (232) on the fixing device; or
the elastic positioning portion (14) further comprises a protrusion (145) disposed on the side of the free end (142) away from the main body portion (11), and the protrusion (145) comprises a removal groove (146) which is configured to be engaged with a removal tool to drive the free end (142) to move.

7. The busbar protective grille (10) of any of claims 1 to 3 and 6, **characterized in that** a limiting groove (1110) is provided at the first opening (111), and the limiting groove (1110) is adapted to be engaged with an outer side wall of the plug-in assembly.

8. The busbar protective grille (10) of any of claims 1 to 3 and 6, **characterized by** further comprising:
an accidental-contact protective portion (15) coupled to the main body portion (11) at the second opening (112) and disposed corresponding to the busbar (40), wherein the accidental-contact protective portion (15) is adapted to shield a side surface of the busbar (40) facing towards the first opening (111), so as to prevent a user from contacting the busbar (40) at the first opening (111).

9. The busbar protective grille (10) of claim 8, **characterized in that** a side of the accidental-contact protective portion (15) facing towards the first opening (111) is provided with a second guiding inclined surface (151) to guide the plug-in assembly to be connected to the busbar (40).

10. The busbar protective grille (10) of any of claims 1 to 3 and 6, **characterized by** further comprising:
at least two groups of ribs (16) disposed in parallel on opposite sides of the main body portion (11) and the pair of side protective portions (12), and coupled to the main body portion (11) and the corresponding side protective portions (12).

11. A busbar protective apparatus (20), **characterized by** comprising:
a first side support (21) and a second side support (22) disposed in parallel;
a front side connecting member (23) coupled to the first side support (21) and the second side support (22); and
a plurality of busbar protective grilles (10) of any of claims 1 to 10, coupled to the front side connecting member (23).

12. The busbar protective apparatus (20) of claim 11, **characterized in that** the front side connecting member (23) is provided with a plurality of through holes (230), and a plurality of busbar protective grilles (10) respectively disposed corresponding to the plurality of through holes (230).

13. The busbar protective apparatus (20) of claim 12, **characterized in that** the plurality of through holes (230) are located at different heights.

14. The busbar protective apparatus (20) of claim 12 or 13, **characterized in that** a pair of notches (231) are provided at an edge of the front side connecting member (23) corresponding to each through hole (230), and a pair of elastic positioning portions (14) of the busbar protective grille (10) are respectively inserted into the pair of notches (231).

15. An electrical control cabinet, **characterized by** comprising:
a cabinet body (30);
a plurality of busbars (40) disposed in the cabinet body (30); and
the busbar protective apparatus (20) of any of claims 11 to 14, mounted in the cabinet body (30), and the plurality of busbar protective grilles (10) respectively abut against the plurality of busbars (40).
